# EUROPEAN PATENT SPECIFICATION

(11) **EP 4 389 867 B1**
(45) Date of publication and mention of the grant of the patent: **13.08.2025**
(21) Application number: 22216522.7
(22) Date of filing: 23.12.2022
(51) Int. Cl.: C11D 17/04, B65B 9/20

(54) **A PROCESS OF MAKING A LAUNDRY DETERGENT ARTICLE**
VERFAHREN ZUR HERSTELLUNG EINES WASCHMITTELARTIKELS
PROCÉDÉ DE FABRICATION D'UN ARTICLE DE DÉTERGENT À LESSIVE

(43) Date of publication of application: 26.06.2024
(73) Proprietor: The Procter & Gamble Company, Cincinnati, OH 45202 (US)
(72) Inventor: FLIDR, Radovan, Dolni Ujezd (CZ); KLUSON, Vladimir, Dolni Ujezd (CZ); TICHY, Marek, 269 01 Rakovník (CZ)
(74) Representative: P&G Patent Belgium UK

(56) References cited:
- EP-A1- 3 919 393
- WO-A1-91/08140
- DE-A1- 3 807 949
- US-A- 3 608 709

## Description

### FIELD OF THE INVENTION

The present invention relates to a process of making a laundry detergent article. The process uses a forming tube that is modified in a way that can mitigate problems that occur when displaced air moves through the forming tube.

### BACKGROUND OF THE INVENTION

Consumers find laundry detergent articles convenient to use, and are very popular product forms, especially single use detergent articles that comprise enough laundry detergent for one dose. Such articles can be detergent sachets that contain a single dose of laundry detergent powder.

These laundry detergent articles, especially sachets, can be made by using a forming unit that comprises a hollow forming tube. The sheet is formed using the forming unit, and powder is dosed through the hollow forming tube and into compartments formed by the forming unit. This process can be faster and efficient. However, problems do need to be overcome when using the hollow forming tube. EP3919393A1 discloses a process for making a water-soluble detergent unit dose article.

One problem that needs to be overcome is that this process suffers from product container pressurization during product filling. Such a pressure increase promotes dust generation impairing process reliability, machine rate and increases utilities energy consumption.

The present invention addresses this problem and provides a process that can alleviate this pressurization problem. The present invention provides for a process wherein the pressure ratios are equalized throughout the whole packing cycle by means of an additional passage that can accommodate the movement of displaced air. Entrapped air in the container area can be vented by one or more passages and in turn avoids a pressure increase. This enables improved product flow with reduced dust generation and allows for an accelerated production cycle with improved process reliability and less utilities consumed.

### SUMMARY OF THE INVENTION

The present invention provides a process of making a laundry detergent article comprising the steps of:
(a) providing a water-insoluble sheet on a roll;
(b) unwinding the water-insoluble sheet in a machine direction from the roll via at least a first intermediate roll;
(c) feeding the water-insoluble sheet from the at least one intermediate roll via a forming unit to shape the water-insoluble sheet into a tube shape;
(d) sealing the water-insoluble sheet via a machine direction seal, a cross-direction seal or a mixture thereof to create a container having an open end;
(e) filling the open container with a water-soluble granular detergent composition;
(f) sealing the second open end via a machine direction seal, a cross-direction seal or a mixture thereof to form a laundry detergent article;

wherein the forming unit comprises a hollow forming tube,
wherein the hollow forming tube comprises at least two passages, a first passage and a second passage,
wherein the first passage runs along the length of the forming tube from the top of the forming tube to the bottom of the forming tube,
wherein the second passage runs parallel to the first passage and extends from the top of the forming tube to at least two thirds down the length of the forming tube,
wherein the second passage is connected to the first passage by at least two air vents, a first air vent that connects the first passage to the second passage in a position within the top half of the forming tube, and a second air vent that connects the first passage to the second passage in a position within the bottom half of the forming tube, such that the second passage forms an air duct from the first passage to the volume space above the forming tube,
wherein during step (e) the open container is filled by passing the water-soluble granular detergent composition through the first passage, but not the second passage, of the forming tube such that the water-soluble granular detergent composition travels from the top of the forming tube to the bottom of the forming tube and into the open container, and
wherein during step (e) any displaced air that is caused by the passage of the water-soluble granular detergent composition through the first passage, can move through the first air vent and/or second vent from the first passage to the volume space above the forming tube via the second passage.

### BRIEF DESCRIPTION OF THE DRAWINGS

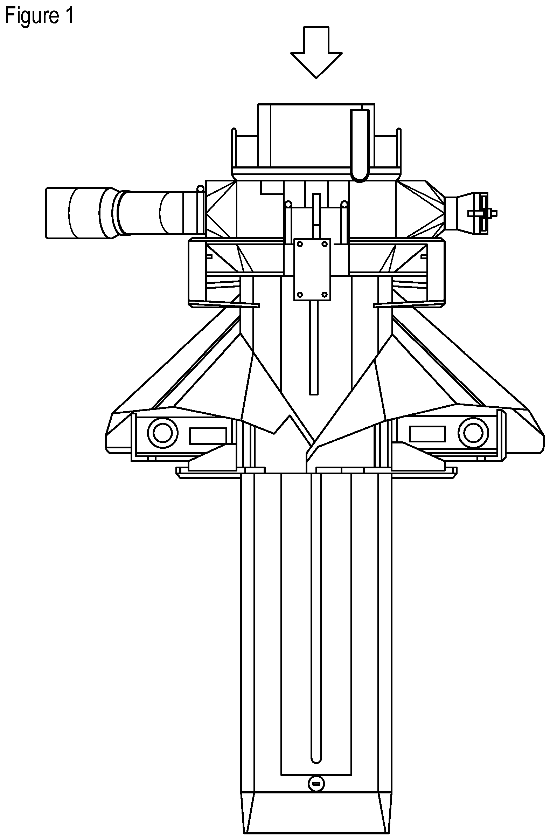

Figure 1 shows the front view of the forming unit

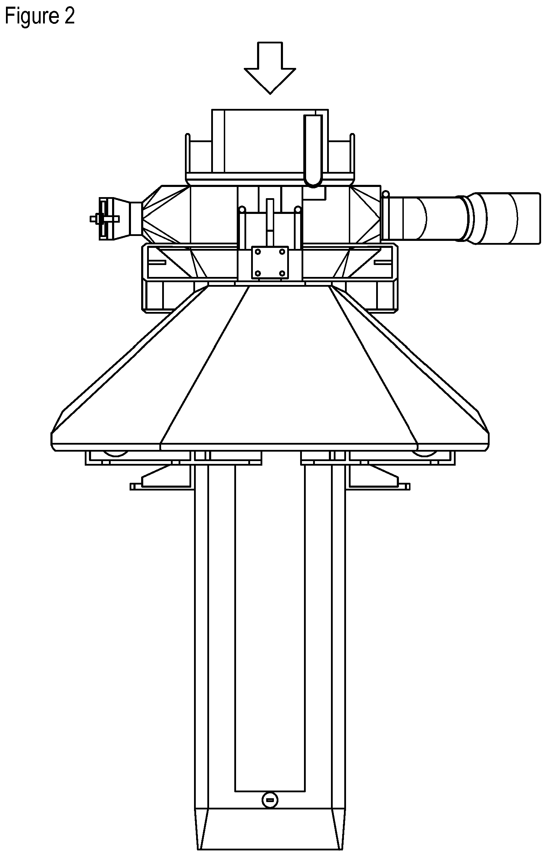

Figure 2 shows the rear view of the forming unit

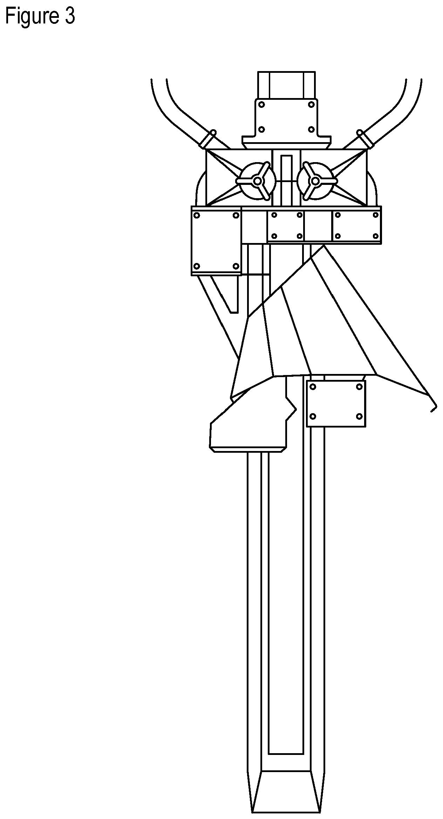

Figure 3 shows the side view of the forming unit

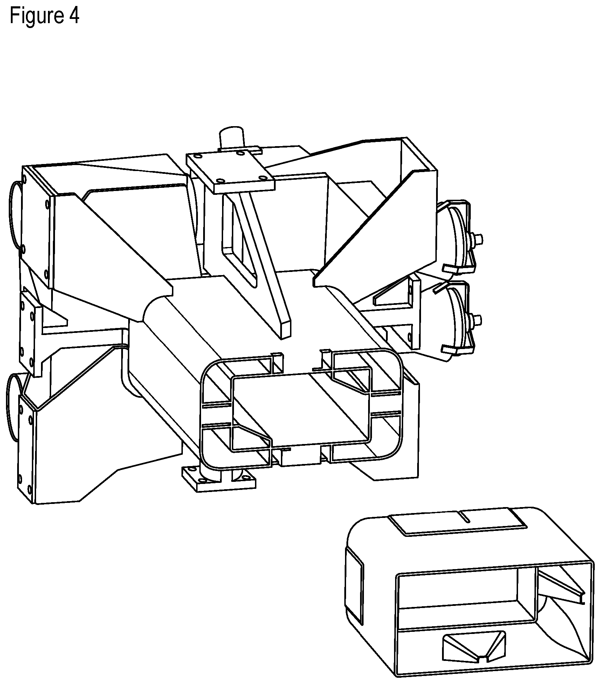

Figure 4 shows the cross-section view of the forming unit

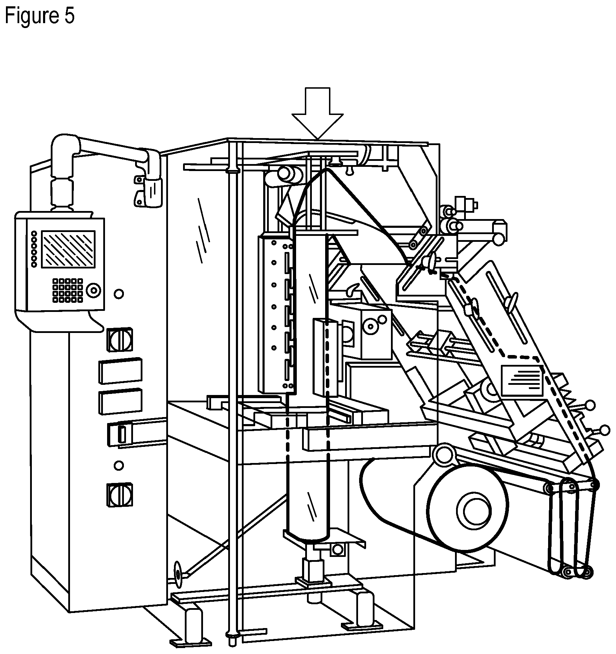

Figure 5 shows the expanded view of the forming unit

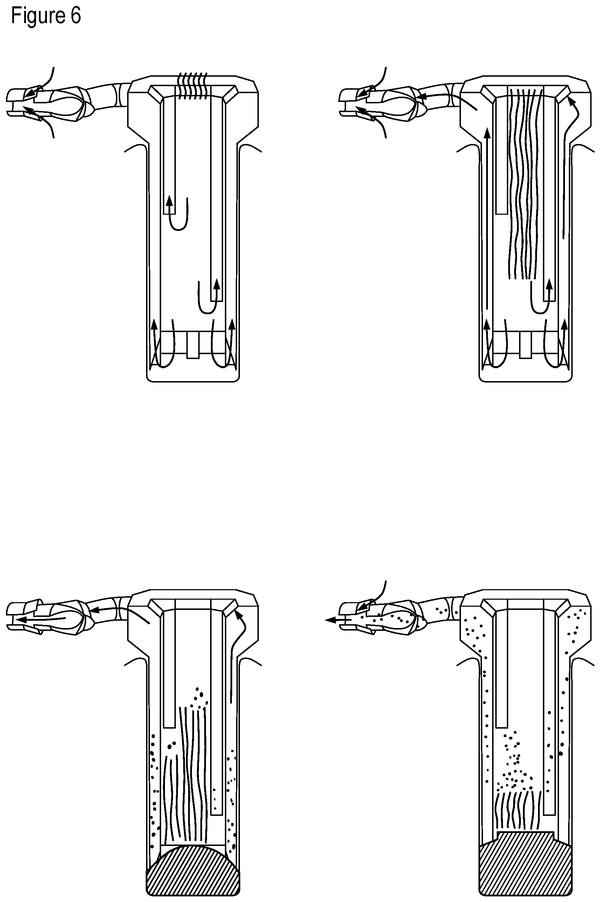

Figure 6 shows the hollow forming tube with airflow and particles.

### DETAILED DESCRIPTION OF THE INVENTION

Process of Making a Laundry Detergent Article. The process of making a laundry detergent article comprises the steps of:
(a) providing a water-insoluble sheet on a roll;
(b) unwinding the water-insoluble sheet in a machine direction from the roll via at least a first intermediate roll;
(c) feeding the water-insoluble sheet from the at least one intermediate roll via a forming unit to shape the water-insoluble sheet into a tube shape;
(d) sealing the water-insoluble sheet via a machine direction seal, a cross-direction seal or a mixture thereof to create a container having an open end;
(e) filling the open container with a water-soluble granular detergent composition;
(f) sealing the second open end via a machine direction seal, a cross-direction seal or a mixture thereof to form a laundry detergent article;

wherein the forming unit comprises a hollow forming tube,
wherein the hollow forming tube comprises at least two passages, a first passage and a second passage,
wherein the first passage runs along the length of the forming tube from the top of the forming tube to the bottom of the forming tube,
wherein the second passage runs parallel to the first passage and extends from the top of the forming tube to at least two thirds down the length of the forming tube,
wherein the second passage is connected to the first passage by at least two air vents, a first air vent that connects the first passage to the second passage in a position within the top half of the forming tube, and a second air vent that connects the first passage to the second passage in a position within the bottom half of the forming tube, such that the second passage forms an air duct from the first passage to the volume space above the forming tube,
wherein during step (e) the open container is filled by passing the water-soluble granular detergent composition through the first passage, but not the second passage, of the forming tube such that the water-soluble granular detergent composition travels from the top of the forming tube to the bottom of the forming tube and into the open container, and
wherein during step (e) any displaced air that is caused by the passage of the water-soluble granular detergent composition through the first passage, can move through the first air vent and/or second vent from the first passage to the volume space above the forming tube via the second passage.

Preferably, the environmental conditions immediately surrounding the laundry detergent article as it is formed from step (d) onwards are at a temperature of between 20°C and 30°C and a relative humidity of between 50% and 95%.

Step (a). Step (a) provides a water-insoluble sheet on a roll.

Step (b). Step (b) unwinds the water-insoluble sheet in a machine direction from the roll via at least a first intermediate roll.

The roll is unwound in a machine direction. By 'machine direction', we herein mean the direction of motion of the water-insoluble sheet through the apparatus used to perform the steps of the present invention. By 'cross-direction' we herein mean the direction 90° relative to the machine direction.

The water-insoluble sheet may be unwound manually or may be unwound using motorized assistance or a mixture thereof. Those skilled in the art will be aware of suitable motorized assistance means.

The water-insoluble sheet is unwound by at least a first intermediate roller. Those skilled in the art will be aware of suitable intermediate rollers. Suitable intermediate rollers can include tension arms, a transfer roller or a mixture thereof. The water-insoluble sheet is unwound by at least a first intermediate roller. Those skilled in the art will be aware of suitable intermediate rollers. Preferably, the water-insoluble sheet passes over a dancer arm which is a weighted pivot arm. The arm incorporates a series of rollers. As the non-woven sheet transports, the arm moves up and down to keep the non-woven sheet under tension. This is necessary so the non-woven sheet does not travel from side to side as it passes through the apparatus. The tension art may be constructed from any suitable material. The transfer roller may be constructed from any suitable material. Those skilled in the art will be aware that transfer rollers may be purchased as Hard Chrome Plated Rollers, Industrial Aluminum Rollers and Teflon Coated Rollers. Other roller types also exist.

Step (c). Step (c) feeds the water-insoluble sheet from the at least one intermediate roll via a forming unit to shape the water-insoluble sheet into a tube shape.

Without wishing to be bound by theory, the forming unit typically shapes the water-insoluble sheet into a tube shape. The tube shape typically comprises a first open end and a second open end. Without wishing to be bound by theory, the first open end is typically opposite to the second open end in a machine direction.

Without wishing to be bound by theory, the non-woven water-insoluble sheettypically has a first edge and a second edge, and the first edge and second edge are typically brought into proximity of one another to create the tube shape.

Preferably, the forming unit comprises a forming tube. Preferably, the non-woven water-insoluble sheet has a first edge and a second edge, and as the non-woven water-insoluble sheet passes over the forming tube the first edge and second edge are brought into proximity of one another. The first edge and second edge may overlap one another. Without wishing to be bound by theory, the first edge is opposite to the second edge in a cross-direction.

Those skilled in the art will be aware of any suitable shape for the forming tube. The forming tube may be constructed from any suitable material. The forming tube may be made from stainless steel. The forming tube may be pattern rolled and polished. The forming tube may comprise a range of coating options to help reduce film drag, reduce blockages and reduce noise. The coatings are designed to reduce friction and sheet drag in the forming unit.

The forming tube may form the tube in a vertical orientation, a horizontal orientation or a diagonal orientation. Preferably, the forming tube is hollow. Without wishing to be bound by theory, a hallow forming tube aids in filling of the laundry detergent article.

Preferably, the forming unit comprises a forming shoulder. Without wishing to be bound by theory, the water-insoluble sheet firstly crests the shoulder ahead of the forming tube, and it is folded around the tube so that the result is a tube of non-woven sheet with the two outer edges of the non-woven sheet overlapping each other.

Those skilled in the art will be aware of any suitable shape for the forming shoulder. The forming shoulder may be constructed from any suitable material. The forming shoulder may be made from stainless steel. The forming shoulder may be pattern rolled and polished. The forming shoulder may comprise a range of coating options to help reduce film drag, reduce blockages and reduce noise.

The forming tube can be set up to make a lap seal or fin seal. A lap seal overlaps the two outer edges of the non-woven sheet to create a flat seal, while a fin seal marries the insides of the two outer edge of the non-woven sheet to create a seal that sticks out, like a fin. A lap seal is generally considered more aesthetically pleasing and uses less material than a fin seal.

Preferably, the forming unit comprises belts to pull the non-woven water-insoluble sheet in a machine direction during forming of the tube. Those skilled in the art will be aware of suitable belts. The non-woven water-insoluble sheet is preferably drawn down by two gear motors which drive friction pull-down belts located on either side of the forming tube. Pull down belts that utilize vacuum suction to grip the non-woven sheet can be suitable alternatives to friction belts if there is a desire to reduce slip between the non-woven sheet and belt.

Step (d). Step (d) seals the water-insoluble sheet via a machine direction seal, a cross-direction seal or a mixture thereof to create a container having an open end.

Without wishing to be bound by theory, a container with an open end is typically made, ready for filling with the detergent composition. Preferably, the open end is positioned to allow for horizontal filling of the open container in next step e. Alternatively, the open end may be positioned to allow for vertical filling of the open container in next step e. Alternatively, the open end may be positioned to allow for diagonal filling of the open container in next step e.

A machine direction seal is a seal which runs in the machine direction. A cross-direction seal is a seal in the cross-direction.

The open container may be made by folding the water-insoluble sheet to create the open tube, then creating a machine direction seal to create the open container wherein the open container is orientated to be filled horizontally. Alternatively, the open container made be made by folding the water-insoluble sheet to create the open tube, then creating a first cross-direction seal followed by a second cross-direction seal to create the open container wherein the open container is orientated to be filled horizontally.

Each machine direction seal may be independently sealed via heat sealing, solvent sealing, pressure sealing, ultrasonic sealing or a mixture thereof, preferably heat sealing. The machine direction seals may be achieved using a machine direction sealing unit, wherein the machine direction sealing unit can be a static seal unit or a reciprocating seal unit. Those skilled in the art will be aware of suitable sealing units.

Without wishing to be bound by theory, when the water-insoluble sheet is sealed using a static machine direction sealing unit, the first edge and second edge of the water-insoluble sheet are sealed together as they continuously pass through the static sealing unit. Those skilled in the art will be aware of suitable static sealing units. Preferably the static sealing unit comprises a first heating element and a second heating element, wherein the heating elements are position opposite to one another. As the first edge and second edge of the water-insoluble sheet pass between the first heating element and the second heating element they are sealed together. The first edge and second edge of the water-insoluble sheet may be sealed in a machine direction such that the sealed edges create a lip that extends from the laundry detergent article. The first and second heating elements may apply a pressure on the first edge and the second edge of the water-insoluble sheet during the heat sealing. Without wishing to be bound by theory, the application of pressure provides an improved seal between the first edge and second edge.

Without wishing to be bound by theory, when the water-insoluble sheet is sealed using a reciprocating machine direction sealing unit, the first edge and second edge of the water-insoluble sheet are sealed together in a stop/start sealing operation. The reciprocating sealing unit seals a portion of the first edge and second edge whilst simultaneously moving in a machine direction. Following sealing the sealing unit moves back to a starting position and seals the next portion of the first edge and second edge. Preferably, the reciprocating sealing unit comprises a first heating element and a second heating element. The first and second heating elements may apply a pressure on the first edge and the second edge of the water-insoluble sheet during the heat sealing. Without wishing to be bound by theory, the application of pressure provides an improved seal between the first edge and second edge.

Each cross-direction may be independently sealed via heat sealing, solvent sealing, pressure sealing, ultrasonic sealing or a mixture thereof, preferably heat sealing.

Without wishing to be bound by theory, when the water-insoluble sheet is sealed using a static cross-direction sealing unit, the water-insoluble sheet is sealed as it continuously passes through the static sealing unit. Those skilled in the art will be aware of suitable static sealing units. Preferably the static sealing unit comprises a first heating element and a second heating element, wherein the heating elements are position opposite to one another. As the water-insoluble sheet pass between the first heating element and the second heating element the two sides are sealed together. The first and second heating elements may apply a pressure on the water-insoluble sheet during the heat sealing. Without wishing to be bound by theory, the application of pressure provides an improved seal.

Without wishing to be bound by theory, when the water-insoluble sheet is sealed using a reciprocating cross-direction sealing unit, the two sides of the water-insoluble sheet are sealed together in a stop/start sealing operation. The reciprocating sealing unit seals a portion of the two sides of the water-insoluble sheet together whilst simultaneously moving in a machine direction. Following sealing the sealing unit moves back to a starting position and seals the next portion of the water-insoluble sheet. Preferably, the reciprocating sealing unit comprises a first heating element and a second heating element. The first and second heating elements may apply a pressure on the water-insoluble sheet during the heat sealing. Without wishing to be bound by theory, the application of pressure provides an improved seal.

Step (e). Step (e) fills the open container with a water-soluble granular detergent composition.

During step (e) the open container is filled by passing the water-soluble granular detergent composition through the first passage, but not the second passage, of the forming tube such that the water-soluble granular detergent composition travels from the top of the forming tube to the bottom of the forming tube and into the open container.

During step (e) any displaced air that is caused by the passage of the water-soluble granular detergent composition through the first passage, can move through the first air vent and/or second vent from the first passage to the volume space above the forming tube via the second passage.

The water-soluble granular detergent composition is described in more detail below. Those skilled in the art will be aware of suitable filling units to fill the open container with the water-soluble granular detergent composition. The filling unit may be an auger. Alternatively, the filling unit may be a multi-head scale. Preferably, the filling unit fills a pre-determined portion of the water-soluble granular detergent composition into the open container. Those skilled in the art will be aware of suitable means.

Preferably, the water-soluble granular detergent composition is dropped down the first passage which is in the middle of the hollow forming tube and filled into the open container.

Step (f). Step (f) seals the second open end via a machine direction seal, a cross-direction seal or a mixture thereof to form a laundry detergent article.

Without wishing to be bound by theory, the filled open container is now sealed closed to create the laundry detergent article.

Each machine direction seal may be independently sealed via heat sealing, solvent sealing, pressure sealing, ultrasonic sealing or a mixture thereof, preferably heat sealing. The machine direction seals may be achieved using a machine direction sealing unit, wherein the machine direction sealing unit can be a static seal unit or a reciprocating seal unit. Those skilled in the art will be aware of suitable sealing units.

Without wishing to be bound by theory, when the open filled container is sealed using a static machine direction sealing unit, the first edge and second edge of the water-insoluble sheet are sealed together as they continuously pass through the static sealing unit. Those skilled in the art will be aware of suitable static sealing units. Preferably the static sealing unit comprises a first heating element and a second heating element, wherein the heating elements are position opposite to one another. As the first edge and second edge of the water-insoluble sheet pass between the first heating element and the second heating element they are sealed together. The first edge and second edge of the water-insoluble sheet may be sealed in a machine direction such that the sealed edges create a lip that extends from the laundry detergent article. The first and second heating elements may apply a pressure on the first edge and the second edge of the water-insoluble sheet during the heat sealing. Without wishing to be bound by theory, the application of pressure provides an improved seal between the first edge and second edge.

Without wishing to be bound by theory, when the filled open container is sealed using a reciprocating machine direction sealing unit, the first edge and second edge of the water-insoluble sheet are sealed together in a stop/start sealing operation. The reciprocating sealing unit seals a portion of the first edge and second edge whilst simultaneously moving in a machine direction. Following sealing the sealing unit moves back to a starting position and seals the next portion of the first edge and second edge. Preferably, the reciprocating sealing unit comprises a first heating element and a second heating element. The first and second heating elements may apply a pressure on the first edge and the second edge of the water-insoluble sheet during the heat sealing. Without wishing to be bound by theory, the application of pressure provides an improved seal between the first edge and second edge.

Each cross-direction may be independently sealed via heat sealing, solvent sealing, pressure sealing, ultrasonic sealing or a mixture thereof, preferably heat sealing.

Without wishing to be bound by theory, when the filled open container is sealed using a static cross-direction sealing unit, the two sides of the water-insoluble sheet are sealed together as they continuously pass through the static sealing unit. Those skilled in the art will be aware of suitable static sealing units. Preferably the static sealing unit comprises a first heating element and a second heating element, wherein the heating elements are position opposite to one another. As the water-insoluble sheet pass between the first heating element and the second heating element the two sides are sealed together. The first and second heating elements may apply a pressure on the water-insoluble sheet during the heat sealing. Without wishing to be bound by theory, the application of pressure provides an improved seal.

Without wishing to be bound by theory, when the filled open container is sealed using a reciprocating cross-direction sealing unit, the two sides of the water-insoluble sheet are sealed together in a stop/start sealing operation. The reciprocating sealing unit seals a portion of the two sides of the water-insoluble sheet together whilst simultaneously moving in a machine direction. Following sealing the sealing unit moves back to a starting position and seals the next portion of the water-insoluble sheet. Preferably, the reciprocating sealing unit comprises a first heating element and a second heating element. The first and second heating elements may apply a pressure on the water-insoluble sheet during the heat sealing. Without wishing to be bound by theory, the application of pressure provides an improved seal.

### Optional Process Step(s).

Step (g) Transferring the Laundry Detergent Article onto a Moving Conveyer. Preferably the closed laundry detergent article is separated from the adjacent filled open container or closed laundry detergent article. Without wishing to be bound by theory, a first laundry detergent article may be created and separated before the next laundry detergent article is made. Alternatively, a first laundry detergent article may be created, followed by a second laundry detergent article and then the two laundry detergent articles separated.

Those skilled in the art will be aware of suitable means to separate the laundry detergent article from the adjacent filled open container or laundry detergent article. The laundry detergent article may be separated using a knife. The knife may be a static knife or a rotating knife.

Preferably the laundry detergent article drops on the conveyer under the influence of gravity. Alternatively, the laundry detergent article is manually transferred, mechanically transferred or a mixture thereof to the conveyer.

Step (h) Transporting the Laundry Detergent Article from the Moving Conveyer into a Packaging Container. Preferably, the conveyer is a continuously moving surface. Those skilled in the art will be aware of suitable conveyor designs to transport the laundry detergent articles in the relevant direction.

Preferably, the conveyer comprises a means to transfer a determined plurality of laundry detergent articles to the container. Preferably, the laundry detergent articles enter into a counting unit that is capable of sorting a prescribed number of laundry detergent articles that are subsequently transferred to the packaging container. Those skilled in the art will be aware of suitable counting technologies that are preferably based on weight, visualization analysis software or a mixture thereof.

Those skilled in the art will be aware of suitable packaging containers. The packaging container may be a packaging container suitable for shipping and selling the laundry detergent articles to consumers. Alternatively, the packaging container may be an intermediate storage container intended to store the laundry detergent articles before they are redistributed into alternative packaging containers for shipping and selling to consumers.

The packaging container can be made from plastic, metal, paper-based material or a mixture thereof.

Preferably, the environmental conditions from step d onwards are a temperature of between 20°C and 30°C and a relative humidity of between 50% and 95%, and wherein 'environmental conditions' mean the conditions immediately surrounding the laundry detergent article. Without wishing to be bound by theory, the issues of film sticking, misalignment and shrinking are exacerbated at higher temperatures and relative humidity. The process of the present was found to be efficient in a range of temperatures and humidity. This results in reduce resources needed as tight control of the temperature and humidity is not as necessary as for known methods of making laundry detergent articles.

Preferably, no lubricating coating is applied to the exterior surface of the unit dose article, preferably wherein the lubricating coating is selected from silica, talc, zeolite or a mixture thereof. Without wishing to be bound by theory, the present invention overcomes the issue of sticking of the unit dose articles during transport and packing without the need to apply a lubricating coating to the exterior surface of the unit dose articles. It is believed that the porous nature of the water-insoluble sheet means that some of the water-soluble granular detergent is transferred to the surface of the laundry detergent article. This has the advantage that a separate lubricating coating is not needed which results in less intensity on resources and a more efficient process.

Forming Unit. The forming unit comprises a hollow forming tube.

The forming unit may comprise a forming shoulder. The non-woven water-insoluble sheet may typically have a first edge and a second edge, and as the non-woven water-insoluble sheet passes over the forming shoulder the first edge and second edge are brought into proximity of one another.

Hollow Forming Tube. The hollow forming tube comprises at least two passages, a first passage and a second passage. The forming tube may comprise more than one second passage.

The forming tube may comprise a third passage that is operated under vacuum and acts as a ventilation system to remove any fine particulate material from the volume space immediately below the bottom of the forming tube. In this manner, the third passage can act as a dust extractor.

First Passage. The first passage runs along the length of the forming tube from the top of the forming tube to the bottom of the forming tube.

Preferably, the first passage is located in the centre of the forming tube.

Second Passage. The second passage runs parallel to the first passage and extends from the top of the forming tube to at least two thirds down the length of the forming tube.

The second passage is connected to the first passage by at least two air vents, a first air vent that connects the first passage to the second passage in a position within the top half of the forming tube, and a second air vent that connects the first passage to the second passage in a position within the bottom half of the forming tube, such that the second passage forms an air duct from the first passage to the volume space above the forming tube.

Preferably, the first air vent connects the first passage to the second passage in a position within one fifth to two fifths along the length of the forming tube from the top.

Preferably, the second air vent connects the first passage to the second passage in a position three fifths to four fifths along the length of the forming tube from the top.

Water-insoluble Sheet. The water-insoluble sheet can be any suitable sheet.

A preferred water-insoluble sheet is a water-insoluble film. A preferred water-insoluble sheet is a multi-layer marine biodegradable laminated film. A suitable multi-layer marine biodegradable laminated film is described in more detail below.

Multi-layer Marine Biodegradable Laminated Film. A suitable film comprises at least two layers: (i) a first layer selected from cellulose or paper; and (ii) a second layer selected from polybutylene succinate and/or co-polymers thereof.

Typically, the film has a marine biodegradability such that it will decompose at least 60% within 60 days, or even at least 60% within 30 days, or even at least 80% within 60 days, or even at least 80% within 30 days, according to the marine biodegradability test OECD 301B.

The film typically has a moisture vapor transfer rate (MVTR) of 10g/m²/day or less, or 8.0g/m²/day or less, or 6.0g/m²/day or less, or 5.0g/m²/day or less. The MVTR test method used is ASTM F1249-13.

The film may comprise an adhesive, wherein the first layer and second layer are laminated together by the adhesive. Suitable adhesives are described in more detail below.

The adhesive may bond a metalized cellulose first layer to the second layer.

The first layer and second layer may be laminated together with an adhesive layer being in between.

First Layer. The first layer is selected from cellulose or paper. The first layer can be cellulose. The first layer can be paper.

The first layer may have been subjected to a metallization treatment. Suitable metallization treatments are described in more detail below.

The first layer may have been subjected to a lacquer coating treatment. Suitable lacquer coating treatments are described in more detail below.

The first layer may have been subjected to a printing treatment. Suitable printing treatments are described in more detail below.

Typically, the first layer has a thickness of at least 5.0µm, and more typically from 20µm to 30µm. If the first layer has been subjected to a treatment, such as a metallization treatment, lacquer coating treatment, and/or printing treatment, the treatment may increase the thickness of the first layer by up to 5.0µm, more typically up to 2.0µm, or up to 1.0µm.

If the first layer is selected from cellulose, then additional layers of cellulose may also be present in the laminate.

Second Layer. The second layer selected from polybutylene succinate and/or co-polymers thereof. A suitable co-polymer is polybutylene succinate adipate co-polymer (PBSA). The second layer may be selected from polybutylene succinate. The second layer is in contact with the laundry detergent powder.

Adhesive. Suitable adhesive can be selected according to the particular composition of the adjoining layers to be bonded in a multi-layer structure. One skilled in the polymer art can select the appropriate adhesive based on the other materials used in the multi-layer structure.

Suitable adhesives can be hot melt adhesives, solvent-based adhesives and water-based adhesives. Solution-based adhesives may also be used.

Suitable adhesives can be selected from acrylic, polyvinyl acetate, and other commonly used adhesives.

The adhesive may be a renewable adhesive, such as BioTAK^{®} by Berkshire Labels.
A suitable adhesive is selected from polyurethane adhesives and/or biodegradable water-based adhesives. A suitable polyurethane adhesive is R2291 from Toyo Morton. A suitable biodegradable water-base adhesive is EPOTAL 3675X from BASF.

Metallization Treatment. The first layer may have been subjected to a metallization treatment. Any - metallization treatments are suitable that are known for cellulose and paper treatment laminate layers. Any suitable metal may be used.

Lacquer Coating Treatment. The first layer may have been subjected to a lacquer coating treatment. Suitable lacquers for use in the lacquer coating treatment are described in more detail below.

Lacquer. The lacquer functions to protect any ink layer from its physical and chemical environment. The lacquer is typically formulated to optimize durability and provide a glossy or matte finish.

Suitable lacquers are selected from resin, additive, and solvent/ water. The lacquer may be a nitrocellulose-based lacquer.

The lacquer is typically present in a thickness of up to 25µm, preferably up to 10µm. The amount of lacquer present affects the rate of degradation for the entire film package, and not just the rate of the degradation of the lacquer itself. Thus, a thinner lacquer layer results in a faster biodegradation rate for the entire film package.

The lacquer may be used in combination with a primer.

Printing Treatment. The first layer may have been subjected to a printing treatment.

Suitable inks used in the printing treatment are described in more detail below.

A suitable printing treatment is the application of an ink, such as a solvent-based ink, to the first layer via a rotogravure printing treatment step.

Ink. Suitable inks can be solvent-based or water-based. The ink may be high abrasive resistant. For example, the high abrasive resistant ink can include coatings cured by ultraviolet radiation (UV) or electron beams (EB).

The ink may be derived from a petroleum source. The ink may be derived from a renewable resource, such as soy, a plant, or a mixture thereof. A suitable ink is a solvent-based ink.

Suitable inks include ECO-SUREITM from Gans Ink & Supply Co. and solvent-based VUTEk^{®} and BioVuTM inks from EFI, which are derived completely from renewable resources (e.g. corn). Suitable inks are based on Joncryl FLX 5060 and standard pigment concentrate based on Joncryl HPD 96 from BASF. The ink is typically present in a thickness of about 0.5µm to about 20µm, preferably about 1µm to about 10µm, more preferably about 2.5µm to about 3.5µm.

Laundry Detergent Article. The laundry detergent article is typically a water-soluble granular detergent composition that is enclosed by the water-insoluble sheet.

Water-soluble Granular Detergent Composition. The granular detergent composition can be any suitable granular detergent composition. The granular detergent composition may be a laundry composition, a hard surface cleaner, a dish washing composition, a toilet cleaner or a mixture thereof.

The water-soluble granular detergent composition is preferably a laundry detergent composition. Typically, the composition is a fully formulated laundry detergent composition, not a portion thereof such as a spray-dried, extruded or agglomerate particle that only forms part of the laundry detergent composition. Typically, the composition comprises a plurality of chemically different particles, such as spray-dried base detergent particles and/or agglomerated base detergent particles and/or extruded base detergent particles, in combination with one or more, typically two or more, or five or more, or even ten or more particles selected from: surfactant particles, including surfactant agglomerates, surfactant extrudates, surfactant needles, surfactant noodles, surfactant flakes; phosphate particles; zeolite particles; silicate salt particles, especially sodium silicate particles; carbonate salt particles, especially sodium carbonate particles; polymer particles such as carboxylate polymer particles, cellulosic polymer particles, starch particles, polyester particles, polyamine particles, terephthalate polymer particles, polyethylene glycol particles; aesthetic particles such as coloured noodles, needles, lamellae particles and ring particles; enzyme particles such as protease granulates, amylase granulates, lipase granulates, cellulase granulates, mannanase granulates, pectate lyase granulates, xyloglucanase granulates, bleaching enzyme granulates and co- granulates of any of these enzymes, preferably these enzyme granulates comprise sodium sulphate; bleach particles, such as percarbonate particles, especially coated percarbonate particles, such as percarbonate coated with carbonate salt, sulphate salt, silicate salt, borosilicate salt, or any combination thereof, perborate particles, bleach activator particles such as tetra acetyl ethylene diamine particles and/or alkyl oxybenzene sulphonate particles, bleach catalyst particles such as transition metal catalyst particles, and/or isoquinolinium bleach catalyst particles, pre-formed peracid particles, especially coated pre-formed peracid particles; filler particles such as sulphate salt particles and chloride particles; clay particles such as montmorillonite particles and particles of clay and silicone; flocculant particles such as polyethylene oxide particles; wax particles such as wax agglomerates; silicone particles, brightener particles; dye transfer inhibition particles; dye fixative particles; perfume particles such as perfume microcapsules and starch encapsulated perfume accord particles, or pro-perfume particles such as Schiff base reaction product particles; hueing dye particles; chelant particles such as chelant agglomerates; and any combination thereof.

Suitable laundry detergent compositions comprise a detergent ingredient selected from: detersive surfactant, such as anionic detersive surfactants, non-ionic detersive surfactants, cationic detersive surfactants, zwitterionic detersive surfactants and amphoteric detersive surfactants; polymers, such as carboxylate polymers, soil release polymer, anti-redeposition polymers, cellulosic polymers and care polymers; bleach, such as sources of hydrogen peroxide, bleach activators, bleach catalysts and pre-formed peracids; photobleach, such as such as zinc and/or aluminium sulphonated phthalocyanine; enzymes, such as proteases, amylases, cellulases, lipases; zeolite builder; phosphate builder; co-builders, such as citric acid and citrate; carbonate, such as sodium carbonate and sodium bicarbonate; sulphate salt, such as sodium sulphate; silicate salt such as sodium silicate; chloride salt, such as sodium chloride; brighteners; chelants; hueing agents; dye transfer inhibitors; dye fixative agents; perfume; silicone; fabric softening agents, such as clay; flocculants, such as polyethyleneoxide; suds supressors; and any combination thereof.

Suitable laundry detergent compositions may have a low buffering capacity. Such laundry detergent compositions typically have a reserve alkalinity to pH 9.5 of less than 5.0gNaOH/100g. These low buffered laundry detergent compositions typically comprise low levels of carbonate salt.

Detersive Surfactant: Suitable detersive surfactants include anionic detersive surfactants, non-ionic detersive surfactant, cationic detersive surfactants, zwitterionic detersive surfactants and amphoteric detersive surfactants. Suitable detersive surfactants may be linear or branched, substituted or un-substituted, and may be derived from petrochemical material or biomaterial.

Anionic Detersive Surfactant: Suitable anionic detersive surfactants include sulphonate and sulphate detersive surfactants.

Suitable sulphonate detersive surfactants include methyl ester sulphonates, alpha olefin sulphonates, alkyl benzene sulphonates, especially alkyl benzene sulphonates, preferably C₁₀₋₁₃ alkyl benzene sulphonate. Suitable alkyl benzene sulphonate (LAS) is obtainable, preferably obtained, by sulphonating commercially available linear alkyl benzene (LAB); suitable LAB includes low 2-phenyl LAB, other suitable LAB include high 2-phenyl LAB, such as those supplied by Sasol under the tradename Hyblene^{®}.

Suitable sulphate detersive surfactants include alkyl sulphate, preferably C₈₋₁₈ alkyl sulphate, or predominantly C₁₂ alkyl sulphate.

A preferred sulphate detersive surfactant is alkyl alkoxylated sulphate, preferably alkyl ethoxylated sulphate, preferably a C₈₋₁₈ alkyl alkoxylated sulphate, preferably a C₈₋₁₈ alkyl ethoxylated sulphate, preferably the alkyl alkoxylated sulphate has an average degree of alkoxylation of from 0.5 to 20, preferably from 0.5 to 10, preferably the alkyl alkoxylated sulphate is a C₈₋₁₈ alkyl ethoxylated sulphate having an average degree of ethoxylation of from 0.5 to 10, preferably from 0.5 to 5, more preferably from 0.5 to 3 and most preferably from 0.5 to 1.5.

The alkyl sulphate, alkyl alkoxylated sulphate and alkyl benzene sulphonates may be linear or branched, substituted or un-substituted, and may be derived from petrochemical material or biomaterial.

Other suitable anionic detersive surfactants include alkyl ether carboxylates.

Suitable anionic detersive surfactants may be in salt form, suitable counter-ions include sodium, calcium, magnesium, amino alcohols, and any combination thereof. A preferred counterion is sodium.

Non-ionic Detersive Surfactant: Suitable non-ionic detersive surfactants are selected from the group consisting of: C₈-C₁₈ alkyl ethoxylates, such as, NEODOL^{®} non-ionic surfactants from Shell; C₆-C₁₂ alkyl phenol alkoxylates wherein preferably the alkoxylate units are ethyleneoxy units, propyleneoxy units or a mixture thereof; C₁₂-C₁₈ alcohol and C₆-C₁₂ alkyl phenol condensates with ethylene oxide/propylene oxide block polymers such as Pluronic^{®} from BASF; alkylpolysaccharides, preferably alkylpolyglycosides; methyl ester ethoxylates; polyhydroxy fatty acid amides; ether capped poly(oxyalkylated) alcohol surfactants; and mixtures thereof.

Suitable non-ionic detersive surfactants are alkylpolyglucoside and/or an alkyl alkoxylated alcohol.

Suitable non-ionic detersive surfactants include alkyl alkoxylated alcohols, preferably C₈₋₁₈ alkyl alkoxylated alcohol, preferably a C₈₋₁₈ alkyl ethoxylated alcohol, preferably the alkyl alkoxylated alcohol has an average degree of alkoxylation of from 1 to 50, preferably from 1 to 30, or from 1 to 20, or from 1 to 10, preferably the alkyl alkoxylated alcohol is a C₈₋₁₈ alkyl ethoxylated alcohol having an average degree of ethoxylation of from 1 to 10, preferably from 1 to 7, more preferably from 1 to 5 and most preferably from 3 to 7. The alkyl alkoxylated alcohol can be linear or branched, and substituted or un-substituted.

Suitable nonionic detersive surfactants include secondary alcohol-based detersive surfactants.

Cationic Detersive Surfactant: Suitable cationic detersive surfactants include alkyl pyridinium compounds, alkyl quaternary ammonium compounds, alkyl quaternary phosphonium compounds, alkyl ternary sulphonium compounds, and mixtures thereof.

Preferred cationic detersive surfactants are quaternary ammonium compounds having the general formula:

(R)(R₁)(R₂)(R₃)N⁺ X⁻

wherein, R is a linear or branched, substituted or unsubstituted C₆₋₁₈ alkyl or alkenyl moiety, R₁ and R₂ are independently selected from methyl or ethyl moieties, R₃ is a hydroxyl, hydroxymethyl or a hydroxyethyl moiety, X is an anion which provides charge neutrality, preferred anions include: halides, preferably chloride; sulphate; and sulphonate.

Zwitterionic Detersive Surfactant: Suitable zwitterionic detersive surfactants include amine oxides and/or betaines.

Polymer: Suitable polymers include carboxylate polymers, soil release polymers, anti-redeposition polymers, cellulosic polymers, care polymers and any combination thereof.

Carboxylate Polymer: The composition may comprise a carboxylate polymer, such as a maleate/acrylate random copolymer or polyacrylate homopolymer. Suitable carboxylate polymers include: polyacrylate homopolymers having a molecular weight of from 4,000 Da to 9,000 Da; maleate/acrylate random copolymers having a molecular weight of from 50,000 Da to 100,000 Da, or from 60,000 Da to 80,000 Da.

Another suitable carboxylate polymer is a co-polymer that comprises: (i) from 50 to less than 98 wt% structural units derived from one or more monomers comprising carboxyl groups; (ii) from 1 to less than 49 wt% structural units derived from one or more monomers comprising sulfonate moieties; and (iii) from 1 to 49 wt% structural units derived from one or more types of monomers selected from ether bond-containing monomers represented by formulas (I) and (II): 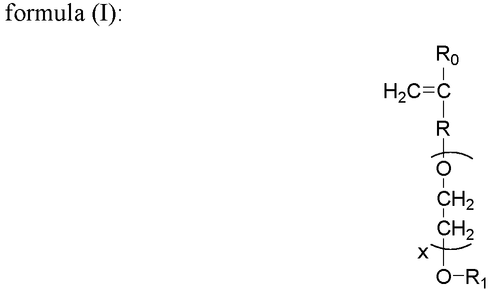 wherein in formula (I), R₀ represents a hydrogen atom or CH₃ group, R represents a CH₂ group, CH₂CH₂ group or single bond, X represents a number 0-5 provided X represents a number 1-5 when R is a single bond, and R₁ is a hydrogen atom or C₁ to C₂₀ organic group; 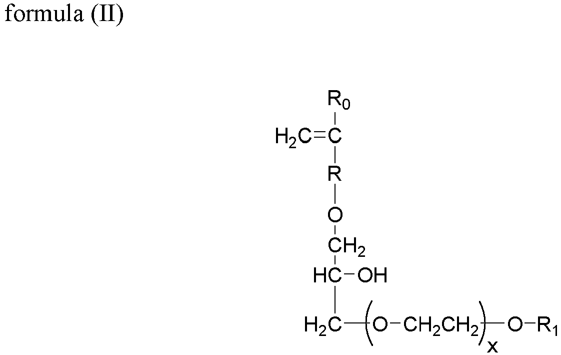 wherein in formula (II), R₀ represents a hydrogen atom or CH₃ group, R represents a CH₂ group, CH₂CH₂ group or single bond, X represents a number 0-5, and R₁ is a hydrogen atom or C₁ to C₂₀ organic group.

It may be preferred that the polymer has a weight average molecular weight of at least 50kDa, or even at least 70kDa.

Soil Release Polymer: The composition may comprise a soil release polymer. A suitable soil release polymer has a structure as defined by one of the following structures (I), (II) or (III):

(I) -[(OCHR¹-CHR²)ₐ-O-OC-Ar-CO-]_{d}

(II) -[(OCHR³-CHR⁴)_{b}-O-OC-sAr-CO-]ₑ

(III) -[(OCHR⁵-CHR⁶)_{c}-OR⁷]_{f}

wherein:
a, b and c are from 1 to 200;
d, e and f are from 1 to 50;
Ar is a 1,4-substituted phenylene;
sAr is 1,3-substituted phenylene substituted in position 5 with SO₃Me;
Me is Li, K, Mg/2, Ca/2, Al/3, ammonium, mono-, di-, tri-, or tetraalkylammonium wherein the alkyl groups are C₁-C₁₈ alkyl or C₂-C₁₀ hydroxyalkyl, or mixtures thereof;
R¹, R², R³, R⁴, R⁵ and R⁶ are independently selected from H or C₁-C₁₈ n- or iso-alkyl; and
R⁷ is a linear or branched C₁-C₁₈ alkyl, or a linear or branched C₂-C₃₀ alkenyl, or a cycloalkyl group with 5 to 9 carbon atoms, or a C₈-C₃₀ aryl group, or a C₆-C₃₀ arylalkyl group.

Suitable soil release polymers are sold by Clariant under the TexCare^{®} series of polymers, e.g. TexCare^{®} SRN240 and TexCare^{®} SRA300. Other suitable soil release polymers are sold by Solvay under the Repel-o-Tex^{®} series of polymers, e.g. Repel-o-Tex^{®} SF2 and Repel-o-Tex^{®} Crystal.

Anti-redeposition Polymer: Suitable anti-redeposition polymers include polyethylene glycol polymers and/or polyethyleneimine polymers.

Suitable polyethylene glycol polymers include random graft co-polymers comprising: (i) hydrophilic backbone comprising polyethylene glycol; and (ii) hydrophobic side chain(s) selected from the group consisting of: C₄-C₂₅ alkyl group, polypropylene, polybutylene, vinyl ester of a saturated C₁-C₆ mono-carboxylic acid, C₁-C₆ alkyl ester of acrylic or methacrylic acid, and mixtures thereof. Suitable polyethylene glycol polymers have a polyethylene glycol backbone with random grafted polyvinyl acetate side chains. The average molecular weight of the polyethylene glycol backbone can be in the range of from 2,000 Da to 20,000 Da, or from 4,000 Da to 8,000 Da. The molecular weight ratio of the polyethylene glycol backbone to the polyvinyl acetate side chains can be in the range of from 1:1 to 1:5, or from 1:1.2 to 1:2. The average number of graft sites per ethylene oxide unit can be less than 0.02, or less than 0.016, the average number of graft sites per ethylene oxide unit can be in the range of from 0.010 to 0.018, or the average number of graft sites per ethylene oxide unit can be less than 0.010, or in the range of from 0.004 to 0.008.

Suitable polyethylene glycol polymers are described in WO08/007320.

A suitable polyethylene glycol polymer is Sokalan HP22.

Cellulosic Polymer: Suitable cellulosic polymers are selected from alkyl cellulose, alkyl alkoxyalkyl cellulose, carboxyalkyl cellulose, alkyl carboxyalkyl cellulose, sulphoalkyl cellulose, more preferably selected from carboxymethyl cellulose, methyl cellulose, methyl hydroxyethyl cellulose, methyl carboxymethyl cellulose, and mixures thereof.

Suitable carboxymethyl celluloses have a degree of carboxymethyl substitution from 0.5 to 0.9 and a molecular weight from 100,000 Da to 300,000 Da.
Suitable carboxymethyl celluloses have a degree of substitution greater than 0.65 and a degree of blockiness greater than 0.45, e.g. as described in WO09/154933.

Care Polymers: Suitable care polymers include cellulosic polymers that are cationically modified or hydrophobically modified. Such modified cellulosic polymers can provide anti-abrasion benefits and dye lock benefits to fabric during the laundering cycle. Suitable cellulosic polymers include cationically modified hydroxyethyl cellulose.

Other suitable care polymers include dye lock polymers, for example the condensation oligomer produced by the condensation of imidazole and epichlorhydrin, preferably in ratio of 1:4:1. A suitable commercially available dye lock polymer is Polyquart^{®} FDI (Cognis).

Other suitable care polymers include amino-silicone, which can provide fabric feel benefits and fabric shape retention benefits.

Bleach: Suitable bleach includes sources of hydrogen peroxide, bleach activators, bleach catalysts, pre-formed peracids and any combination thereof. A particularly suitable bleach includes a combination of a source of hydrogen peroxide with a bleach activator and/or a bleach catalyst.

Source of Hydrogen Peroxide: Suitable sources of hydrogen peroxide include sodium perborate and/or sodium percarbonate.

Bleach Activator: Suitable bleach activators include tetra acetyl ethylene diamine and/or alkyl oxybenzene sulphonate.

Bleach Catalyst: The composition may comprise a bleach catalyst. Suitable bleach catalysts include oxaziridinium bleach catalysts, transistion metal bleach catalysts, especially manganese and iron bleach catalysts. A suitable bleach catalyst has a structure corresponding to general formula below: 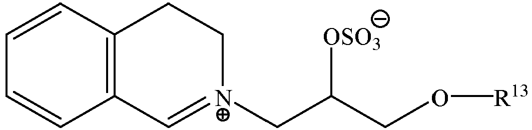 wherein R¹³ is selected from the group consisting of 2-ethylhexyl, 2-propylheptyl, 2-butyloctyl, 2-pentylnonyl, 2-hexyldecyl, n-dodecyl, n-tetradecyl, n-hexadecyl, n-octadecyl, isononyl, iso-decyl, iso-tridecyl and iso-pentadecyl.

Pre-formed Peracid: Suitable pre-form peracids include phthalimido-peroxycaproic acid.

Enzymes: Suitable enzymes include lipases, proteases, cellulases, amylases and any combination thereof.

Protease: Suitable proteases include metalloproteases and/or serine proteases. Examples of suitable neutral or alkaline proteases include: subtilisins (EC 3.4.21.62); trypsin-type or chymotrypsin-type proteases; and metalloproteases. The suitable proteases include chemically or genetically modified mutants of the aforementioned suitable proteases.

Suitable commercially available protease enzymes include those sold under the trade names Alcalase^{®}, Savinase^{®}, Primase^{®}, Durazym^{®}, Polarzyme^{®}, Kannase^{®}, Liquanase^{®}, Liquanase Ultra^{®}, Savinase Ultra^{®}, Ovozyme^{®}, Neutrase^{®}, Everlase^{®} and Esperase^{®} by Novozymes A/S (Denmark), those sold under the tradename Maxatase^{®}, Maxacal^{®}, Maxapem^{®}, Preferenz P^{®} series of proteases including Preferenz^{®} P280, Preferenz^{®} P281, Preferenz^{®} P2018-C, Preferenz^{®} P2081-WE, Preferenz^{®} P2082-EE and Preferenz^{®} P2083-A/J, Properase^{®}, Purafect^{®}, Purafect Prime^{®}, Purafect Ox^{®}, FN3^{®} , FN4^{®}, Excellase^{®} and Purafect OXP^{®} by DuPont, those sold under the tradename Opticlean^{®} and Optimase^{®} by Solvay Enzymes, those available from Henkel/ Kemira, namely BLAP (sequence shown in Figure 29 of US 5,352,604 with the folowing mutations S99D + S101 R + S103A + V104I + G159S, hereinafter referred to as BLAP), BLAP R (BLAP with S3T + V4I + V199M + V205I + L217D), BLAP X (BLAP with S3T + V4I + V205I) and BLAP F49 (BLAP with S3T + V4I + A194P + V199M + V205I + L217D) - all from Henkel/Kemira; and KAP (Bacillus alkalophilus subtilisin with mutations A230V + S256G + S259N) from Kao.

A suitable protease is described in WO11/140316 and WO11/072117.

Amylase: Suitable amylases are derived from AA560 alpha amylase endogenous to Bacillus sp. DSM 12649, preferably having the following mutations: R118K, D183*, G184*, N195F, R320K, and/or R458K. Suitable commercially available amylases include Stainzyme^{®}, Stainzyme^{®} Plus, Natalase, Termamyl^{®}, Termamyl^{®} Ultra, Liquezyme^{®} SZ, Duramyl^{®}, Everest^{®} (all Novozymes) and Spezyme^{®} AA, Preferenz S^{®} series of amylases, Purastar^{®} and Purastar^{®} Ox Am, Optisize^{®} HT Plus (all Du Pont).

A suitable amylase is described in WO06/002643.

Cellulase: Suitable cellulases include those of bacterial or fungal origin. Chemically modified or protein engineered mutants are also suitable. Suitable cellulases include cellulases from the genera *Bacillus, Pseudomonas, Humicola, Fusarium, Thielavia, Acremonium,* e.g., the fungal cellulases produced from *Humicola insolens, Myceliophthora thermophila* and *Fusarium oxysporum.*

Commercially available cellulases include Celluzyme^{®}, Carezyme^{®}, and Carezyme^{®} Premium, Celluclean^{®} and Whitezyme^{®} (Novozymes A/S), Revitalenz^{®} series of enzymes (Du Pont), and Biotouch^{®} series of enzymes (AB Enzymes). Suitable commercially available cellulases include Carezyme^{®} Premium, Celluclean^{®} Classic. Suitable cellulases are described in WO07/144857 and WO10/056652.

Lipase: Suitable lipases include those of bacterial, fungal or synthetic origin, and variants thereof. Chemically modified or protein engineered mutants are also suitable. Examples of suitable lipases include lipases from *Humicola* (synonym *Thermomyces*)*,* e.g., from *H. lanuginosa* (*T. lanuginosus*)*.*

The lipase may be a "first cycle lipase", e.g. such as those described in WO06/090335 and WO13/116261. In one aspect, the lipase is a first-wash lipase, preferably a variant of the wild-type lipase from Thermomyces lanuginosus comprising T231R and/or N233R mutations. Preferred lipases include those sold under the tradenames Lipex^{®}, Lipolex^{®} and Lipoclean^{®} by Novozymes, Bagsvaerd, Denmark.

Other suitable lipases include: Liprl 139, e.g. as described in WO2013/171241; and TfuLip2, e.g. as described in WO2011/084412 and WO2013/033318.

Other Enzymes: Other suitable enzymes are bleaching enzymes, such as peroxidases/oxidases, which include those of plant, bacterial or fungal origin and variants thereof. Commercially available peroxidases include Guardzyme^{®} (Novozymes A/S). Other suitable enzymes include choline oxidases and perhydrolases such as those used in Gentle Power Bleach^{™}.

Other suitable enzymes include pectate lyases sold under the tradenames X-Pect^{®}, Pectaway^{®} (from Novozymes A/S, Bagsvaerd, Denmark) and PrimaGreen^{®} (DuPont) and mannanases sold under the tradenames Mannaway^{®} (Novozymes A/S, Bagsvaerd, Denmark), and Mannastar^{®} (Du Pont).

Zeolite Builder: The composition may comprise zeolite builder. The composition may comprise from 0wt% to 5wt% zeolite builder, or 3wt% zeolite builder. The composition may even be substantially free of zeolite builder; substantially free means "no deliberately added". Typical zeolite builders include zeolite A, zeolite P and zeolite MAP.

Phosphate Builder: The composition may comprise phosphate builder. The composition may comprise from 0wt% to 5wt% phosphate builder, or to 3wt%, phosphate builder. The composition may even be substantially free of phosphate builder; substantially free means "no deliberately added". A typical phosphate builder is sodium tri-polyphosphate.

Carbonate Salt: The composition may comprise carbonate salt. The composition may comprise from 0wt% to 10wt% carbonate salt, or to 5wt% carbonate salt. The composition may even be substantially free of carbonate salt; substantially free means "no deliberately added". Suitable carbonate salts include sodium carbonate and sodium bicarbonate.

Silicate Salt: The composition may comprise silicate salt. The composition may comprise from 0wt% to 10wt% silicate salt, or to 5wt% silicate salt. A preferred silicate salt is sodium silicate, especially preferred are sodium silicates having a Na₂O:SiO₂ ratio of from 1.0 to 2.8, preferably from 1.6 to 2.0.

Sulphate Salt: A suitable sulphate salt is sodium sulphate.

Brightener: Suitable fluorescent brighteners include: di-styryl biphenyl compounds, e.g. Tinopal^{®} CBS-X, di-amino stilbene di-sulfonic acid compounds, e.g. Tinopal^{®} DMS pure Xtra and Blankophor^{®} HRH, and Pyrazoline compounds, e.g. Blankophor^{®} SN, and coumarin compounds, e.g. Tinopal^{®} SWN.

Preferred brighteners are: sodium 2 (4-styryl-3-sulfophenyl)-2H-napthol[1,2-d]triazole, disodium 4,4'-bis{[(4-anilino-6-(N methyl-N-2 hydroxyethyl)amino 1 ,3,5- triazin-2-yl)];amino}stilbene-2-2' disulfonate, disodium 4,4'-bis{[(4-anilino-6-morpholino-1,3,5-triazin-2-yl)]amino} stilbene-2-2' disulfonate, and disodium 4,4'- bis(2-sulfostyryl)biphenyl. A suitable fluorescent brightener is C.I. Fluorescent Brightener 260, which may be used in its beta or alpha crystalline forms, or a mixture of these forms.

Chelant: The composition may also comprise a chelant selected from: diethylene triamine pentaacetate, diethylene triamine penta(methyl phosphonic acid), ethylene diamine-N'N'-disuccinic acid, ethylene diamine tetraacetate, ethylene diamine tetra(methylene phosphonic acid) and hydroxyethane di(methylene phosphonic acid). A preferred chelant is ethylene diamine-N'N'-disuccinic acid (EDDS) and/or hydroxyethane diphosphonic acid (HEDP). The composition preferably comprises ethylene diamine-N'N'- disuccinic acid or salt thereof. Preferably the ethylene diamine-N'N'-disuccinic acid is in S,S enantiomeric form. Preferably the composition comprises 4,5-dihydroxy-m-benzenedisulfonic acid disodium salt. Preferred chelants may also function as calcium carbonate crystal growth inhibitors such as: 1-hydroxyethanediphosphonic acid (HEDP) and salt thereof; N,N-dicarboxymethyl-2-aminopentane-1,5-dioic acid and salt thereof; 2-phosphonobutane-1,2,4-tricarboxylic acid and salt thereof; and combination thereof.

Hueing Agent: Suitable hueing agents include small molecule dyes, typically falling into the Colour Index (C.I.) classifications of Acid, Direct, Basic, Reactive (including hydrolysed forms thereof) or Solvent or Disperse dyes, for example classified as Blue, Violet, Red, Green or Black, and provide the desired shade either alone or in combination. Preferred such hueing agents include Acid Violet 50, Direct Violet 9, 66 and 99, Solvent Violet 13 and any combination thereof.

Many hueing agents are known and described in the art which may be suitable for the present invention, such as hueing agents described in WO2014/089386.

Suitable hueing agents include phthalocyanine and azo dye conjugates, such as described in WO2009/069077.

Suitable hueing agents may be alkoxylated. Such alkoxylated compounds may be produced by organic synthesis that may produce a mixture of molecules having different degrees of alkoxylation. Such mixtures may be used directly to provide the hueing agent, or may undergo a purification step to increase the proportion of the target molecule. Suitable hueing agents include alkoxylated bis-azo dyes, such as described in WO2012/054835, and/or alkoxylated thiophene azo dyes, such as described in WO2008/087497 and WO2012/166768.

The hueing agent may be incorporated into the detergent composition as part of a reaction mixture which is the result of the organic synthesis for a dye molecule, with optional purification step(s). Such reaction mixtures generally comprise the dye molecule itself and in addition may comprise un-reacted starting materials and/or by-products of the organic synthesis route. Suitable hueing agents can be incorporated into hueing dye particles, such as described in WO 2009/069077.

Dye Transfer Inhibitors: Suitable dye transfer inhibitors include polyamine N-oxide polymers, copolymers of N-vinylpyrrolidone and N-vinylimidazole, polyvinylpyrrolidone, polyvinyloxazolidone, polyvinylimidazole and mixtures thereof. Preferred are poly(vinyl pyrrolidone), poly(vinylpyridine betaine), poly(vinylpyridine N-oxide), poly(vinyl pyrrolidone-vinyl imidazole) and mixtures thereof. Suitable commercially available dye transfer inhibitors include PVP-K15 and K30 (Ashland), Sokalan^{®} HP165, HP50, HP53, HP59, HP56K, HP56, HP66 (BASF), Chromabond^{®} S-400, S403E and S-100 (Ashland).

Perfume: Suitable perfumes comprise perfume materials selected from the group: (a) perfume materials having a ClogP of less than 3.0 and a boiling point of less than 250°C (quadrant 1 perfume materials); (b) perfume materials having a ClogP of less than 3.0 and a boiling point of 250°C or greater (quadrant 2 perfume materials); (c) perfume materials having a ClogP of 3.0 or greater and a boiling point of less than 250°C (quadrant 3 perfume materials); (d) perfume materials having a ClogP of 3.0 or greater and a boiling point of 250°C or greater (quadrant 4 perfume materials); and (e) mixtures thereof.

It may be preferred for the perfume to be in the form of a perfume delivery technology. Such delivery technologies further stabilize and enhance the deposition and release of perfume materials from the laundered fabric. Such perfume delivery technologies can also be used to further increase the longevity of perfume release from the laundered fabric. Suitable perfume delivery technologies include: perfume microcapsules, pro-perfumes, polymer assisted deliveries, molecule assisted deliveries, fiber assisted deliveries, amine assisted deliveries, cyclodextrin, starch encapsulated accord, zeolite and other inorganic carriers, and any mixture thereof. A suitable perfume microcapsule is described in WO2009/101593.

Silicone: Suitable silicones include polydimethylsiloxane and amino-silicones. Suitable silicones are described in WO05075616.

Process for Making the Solid Composition: Typically, the particles of the composition can be prepared by any suitable method. For example: spray-drying, agglomeration, extrusion and any combination thereof.

Typically, a suitable spray-drying process comprises the step of forming an aqueous slurry mixture, transferring it through at least one pump, preferably two pumps, to a pressure nozzle. Atomizing the aqueous slurry mixture into a spray-drying tower and drying the aqueous slurry mixture to form spray-dried particles. Preferably, the spray-drying tower is a counter-current spray-drying tower, although a co-current spray-drying tower may also be suitable.

Typically, the spray-dried powder is subjected to cooling, for example an air lift. Typically, the spray-drying powder is subjected to particle size classification, for example a sieve, to obtain the desired particle size distribution. Preferably, the spray-dried powder has a particle size distribution such that weight average particle size is in the range of from 300 micrometers to 500 micrometers, and less than 10wt% of the spray-dried particles have a particle size greater than 2360 micrometers.

It may be preferred to heat the aqueous slurry mixture to elevated temperatures prior to atomization into the spray-drying tower, such as described in WO2009/158162.

It may be preferred for anionic surfactant, such as linear alkyl benzene sulphonate, to be introduced into the spray-drying process after the step of forming the aqueous slurry mixture: for example, introducing an acid precursor to the aqueous slurry mixture after the pump, such as described in WO 09/158449.

It may be preferred for a gas, such as air, to be introduced into the spray-drying process after the step of forming the aqueous slurry, such as described in WO2013/181205.

It may be preferred for any inorganic ingredients, such as sodium sulphate and sodium carbonate, if present in the aqueous slurry mixture, to be micronized to a small particle size such as described in WO2012/134969.

Typically, a suitable agglomeration process comprises the step of contacting a detersive ingredient, such as a detersive surfactant, e.g. linear alkyl benzene sulphonate (LAS) and/or alkyl alkoxylated sulphate, with an inorganic material, such as sodium carbonate and/or silica, in a mixer. The agglomeration process may also be an in-situ neutralization agglomeration process wherein an acid precursor of a detersive surfactant, such as LAS, is contacted with an alkaline material, such as carbonate and/or sodium hydroxide, in a mixer, and wherein the acid precursor of a detersive surfactant is neutralized by the alkaline material to form a detersive surfactant during the agglomeration process.

Other suitable detergent ingredients that may be agglomerated include polymers, chelants, bleach activators, silicones and any combination thereof.

The agglomeration process may be a high, medium or low shear agglomeration process, wherein a high shear, medium shear or low shear mixer is used accordingly. The agglomeration process may be a multi-step agglomeration process wherein two or more mixers are used, such as a high shear mixer in combination with a medium or low shear mixer. The agglomeration process can be a continuous process or a batch process.

It may be preferred for the agglomerates to be subjected to a drying step, for example to a fluid bed drying step. It may also be preferred for the agglomerates to be subjected to a cooling step, for example a fluid bed cooling step.

Typically, the agglomerates are subjected to particle size classification, for example a fluid bed elutriation and/or a sieve, to obtain the desired particle size distribution. Preferably, the agglomerates have a particle size distribution such that weight average particle size is in the range of from 300 micrometers to 800 micrometers, and less than 10wt% of the agglomerates have a particle size less than 150 micrometers and less than 10wt% of the agglomerates have a particle size greater than 1200 micrometers.

It may be preferred for fines and over-sized agglomerates to be recycled back into the agglomeration process. Typically, over-sized particles are subjected to a size reduction step, such as grinding, and recycled back into an appropriate place in the agglomeration process, such as the mixer. Typically, fines are recycled back into an appropriate place in the agglomeration process, such as the mixer.

It may be preferred for ingredients such as polymer and/or non-ionic detersive surfactant and/or perfume to be sprayed onto base detergent particles, such as spray-dried base detergent particles and/or agglomerated base detergent particles. Typically, this spray-on step is carried out in a tumbling drum mixer.

Method of Laundering Fabric: The method of laundering fabric comprises the step of contacting the solid composition to water to form a wash liquor, and laundering fabric in said wash liquor. Typically, the wash liquor has a temperature of above 0°C to 90°C, or to 60°C, or to 40°C, or to 30°C, or to 20°C. The fabric may be contacted to the water prior to, or after, or simultaneous with, contacting the solid composition with water. Typically, the wash liquor is formed by contacting the laundry detergent to water in such an amount so that the concentration of laundry detergent composition in the wash liquor is from 0.2g/l to 20g/l, or from 0.5g/l to 10g/l, or to 5.0g/l. The method of laundering fabric can be carried out in a front-loading automatic washing machine, top loading automatic washing machines, including high efficiency automatic washing machines, or suitable hand-wash vessels._Typically, the wash liquor comprises 90 litres or less, or 60 litres or less, or 15 litres or less, or 10 litres or less of water. Typically, 200g or less, or 150g or less, or 100g or less, or 50g or less of laundry detergent composition is contacted to water to form the wash liquor.

### Solid Free-flowing Particulate Laundry Detergent Composition Examples:

| Ingredient | Amount (in wt%) |
|---|---|
| Anionic detersive surfactant (such as alkyl benzene sulphonate, alkyl ethoxylated sulphate and mixtures thereof) | from 8wt% to 15wt% |
| Non-ionic detersive surfactant (such as alkyl ethoxylated alcohol) | from 0.1wt% to 4wt% |
| Cationic detersive surfactant (such as quaternary ammonium compounds) | from 0wt% to 4wt% |
| Other detersive surfactant (such as zwiterionic detersive surfactants, amphoteric surfactants and mixtures thereof) | from 0wt% to 4wt% |
| Carboxylate polymer (such as co-polymers of maleic acid and acrylic acid and/or carboxylate polymers comprising ether moieties and sulfonate moieties) | from 0.1wt% to 4wt% |
| Polyethylene glycol polymer (such as a polyethylene glycol polymer comprising polyvinyl acetate side chains) | from 0wt% to 4wt% |
| Polyester soil release polymer (such as Repel-o-tex and/or Texcare polymers) | from 0wt% to 2wt% |
| Cellulosic polymer (such as carboxymethyl cellulose, methyl cellulose and combinations thereof) | from 0.5wt% to 2wt% |
| Other polymer (such as care polymers) | from 0wt% to 4wt% |
| Zeolite builder and phosphate builder (such as zeolite 4A and/or sodium tripolyphosphate) | from 0wt% to 4wt% |
| Other co-builder (such as sodium citrate and/or citric acid) | from 0wt% to 3wt% |
| Carbonate salt (such as sodium carbonate and/or sodium bicarbonate) | from 0wt% to 20wt% |
| Silicate salt (such as sodium silicate) | from 0wt% to 10wt% |
| Filler (such as sodium sulphate and/or bio-fillers) | from 10wt% to 70wt% |
| Source of hydrogen peroxide (such as sodium percarbonate) | from 0wt% to 20wt% |
| Bleach activator (such as tetraacetylethylene diamine (TAED) and/or nonanoyloxybenzenesulphonate (NOBS)) | from 0wt% to 8wt% |
| Bleach catalyst (such as oxaziridinium-based bleach catalyst and/or transition metal bleach catalyst) | from 0wt% to 0.1wt% |
| Other bleach (such as reducing bleach and/or pre-formed peracid) | from 0wt% to 10wt% |
| Photobleach (such as zinc and/or aluminium sulphonated phthalocyanine) | from 0wt% to 0.1wt% |
| Chelant (such as ethylenediamine-N'N'-disuccinic acid (EDDS) and/or hydroxyethane diphosphonic acid (HEDP)) | from 0.2wt% to 1wt% |
| Hueing agent (such as direct violet 9, 66, 99, acid red 50, solvent violet 13 and any combination thereof) | from 0wt% to 1wt% |
| Brightener (C.I. fluorescent brightener 260 or C.I. fluorescent brightener 351) | from 0.1wt% to 0.4wt% |
| Protease (such as Savinase, Savinase Ultra, Purafect, FN3, FN4 and any combination thereof) | from 0.1wt% to 0.4wt% |
| Amylase (such as Termamyl, Termamyl ultra, Natalase, Optisize, Stainzyme, Stainzyme Plus and any combination thereof) | from 0wt% to 0.2wt% |
| Cellulase (such as Carezyme and/or Celluclean) | from 0wt% to 0.2wt% |
| Lipase (such as Lipex, Lipolex, Lipoclean and any combination thereof) | from 0wt% to 1wt% |
| Other enzyme (such as xyloglucanase, cutinase, pectate lyase, mannanase, bleaching enzyme) | from 0wt% to 2wt% |
| Fabric softener (such as montmorillonite clay and/or polydimethylsiloxane (PDMS)) | from 0wt% to 15wt% |
| Flocculant (such as polyethylene oxide) | from 0wt% to 1wt% |
| Suds suppressor (such as silicone and/or fatty acid) | from 0wt% to 4wt% |
| Perfume (such as perfume microcapsule, spray-on perfume, starch encapsulated perfume accords, perfume loaded zeolite, and any combination thereof) | from 0.1wt% to 1wt% |
| Aesthetics (such as coloured soap rings and/or coloured speckles/noodles) | from 0wt% to 1wt% |
| Miscellaneous | balance to 100wt% |

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

## Claims

1. A process of making a laundry detergent article comprising the steps of:
(a) providing a water-insoluble sheet on a roll;
(b) unwinding the water-insoluble sheet in a machine direction from the roll via at least a first intermediate roll;
(c) feeding the water-insoluble sheetfrom the at least one intermediate roll via a forming unit to shape the water-insoluble sheetinto a tube shape;
(d) sealing the water-insoluble sheetvia a machine direction seal, a cross-direction seal or a mixture thereof to create a container having an open end;
(e) filling the open container with a water-soluble granular detergent composition;
(f) sealing the second open end via a machine direction seal, a cross-direction seal or a mixture thereof to form a laundry detergent article;
wherein the forming unit comprises a hollow forming tube,
wherein the hollow forming tube comprises at least two passages, a first passage and a second passage,
wherein the first passage runs along the length of the forming tube from the top of the forming tube to the bottom of the forming tube,
wherein the second passage runs parallel to the first passage and extends from the top of the forming tube to at least two thirds down the length of the forming tube,
wherein the second passage is connected to the first passage by at least two air vents, a first air vent that connects the first passage to the second passage in a position within the top half of the forming tube, and a second air vent that connects the first passage to the second passage in a position within the bottom half of the forming tube, such that the second passage forms an air duct from the first passage to the volume space above the forming tube,
wherein during step (e) the open container is filled by passing the water-soluble granular detergent composition through the first passage, but not the second passage, of the forming tube such that the water-soluble granular detergent composition travels from the top of the forming tube to the bottom of the forming tube and into the open container, and
wherein during step (e) any displaced air that is caused by the passage of the water-soluble granular detergent composition through the first passage, can move through the first air vent and/or second vent from the first passage to the volume space above the forming tube via the second passage.

2. A process according to claim 1, wherein the first air vent connects the first passage to the second passage in a position within one fifth to two fifths along the length of the forming tube from the top.

3. A process according to any preceding claim, wherein the second air vent connects the first passage to the second passage in a position three fifths to four fifths along the length of the forming tube from the top.

4. A process according to any preceding claim, wherein the forming tube comprises more than one second passage.

5. A process according to any preceding claim, wherein the first passage is located in the centre of the forming tube.

6. A process according to any preceding claim, wherein the forming unit comprises a forming shoulder wherein the non-woven water-insoluble sheethas a first edge and a second edge, and as the non-woven water-insoluble sheet passes over the forming shoulder the first edge and second edge are brought into proximity of one another.

7. A process according to any preceding claim, wherein the forming tube comprises a third passage that is operated under vacuum and acts as a ventilation system to remove any fine particulate material from the volume space immediately below the bottom of the forming tube.

8. A process according to any preceding claim, wherein the environmental conditions immediately surrounding the laundry detergent article as it is formed from step (d) onwards are at a temperature of between 20°C and 30°C and a relative humidity of between 50% and 95%.

9. A process according to any preceding claim, wherein the non-woven water-insoluble sheetcomprises polyvinyl alcohol.

10. A process according to claim 9, wherein the polyvinyl alcohol has an average percentage degree of hydrolysis of from 75% to 100%.

11. A process according to any of claims 9-10, wherein the polyvinyl alcohol has an average viscosity, when measured as a 4wt% aqueous solution in demineralized water at 20°C, of from 1 to 65 mPas.

12. A process according to any of claims 9-11, wherein the non-woven water-insoluble sheetcomprises a plurality of fibres, wherein the fibres comprise polyvinyl alcohol.

13. A process according to any of claims 9-12, wherein the polyvinyl alcohol is thermoplastic.

14. A process according to any preceding claim, wherein the water-insoluble sheethas a basis weight of between 15gsm and 60gsm.

## Patentansprüche

1. Verfahren zum Herstellen eines Wäschewaschmittelartikels, umfassend die Schritte:
(a) Bereitstellen einer wasserunlöslichen Lage auf einer Walze;
(b) Abwickeln der wasserunlöslichen Lage in einer Maschinenlaufrichtung von der Walze über wenigstens eine erste Zwischenwalze;
(c) Zuführen der wasserunlöslichen Lage von der wenigstens einen Zwischenwalze über eine Formeinheit, um die wasserunlösliche Lage in eine Röhrengestalt auszugestalten;
(d) Heißversiegeln der wasserunlöslichen Lage über eine Heißversiegelung in Maschinenlaufrichtung, eine Heißversiegelung in Querrichtung oder eine Mischung davon, um einen Behälter, der ein offenes Ende aufweist, zu schaffen;
(e) Füllen des offenen Behälters mit einer wasserlöslichen granulösen Waschmittelzusammensetzung;
(f) Versiegeln des zweiten offenen Endes über eine Heißversiegelung in Maschinenlaufrichtung, eine Heißversiegelung in Querrichtung oder eine Mischung davon, um einen Wäschewaschmittelartikel zu formen;
wobei die Formeinheit eine hohle Formröhre umfasst,
wobei die hohle Formröhre wenigstens zwei Durchgänge umfasst, einen ersten Durchgang und einen zweiten Durchgang,
wobei der erste Durchgang entlang der Länge der Formröhre von dem Oberteil der Formröhre bis zu dem Unterteil der Formröhre verläuft,
wobei der zweite Durchgang parallel zu dem ersten Durchgang verläuft und sich von dem Oberteil der Formröhre bis zu wenigstens zwei Drittel der Länge der Formröhre nach unten erstreckt,
wobei der zweite Durchgang durch wenigstens zwei Luftentlüftungsöffnungen mit dem ersten Durchgang verbunden ist, eine erste Luftentlüftungsöffnung, die den ersten Durchgang mit dem zweiten Durchgang in einer Position innerhalb der oberen Hälfte der Formröhre verbindet, und eine zweite Luftentlüftungsöffnung, die den ersten Durchgang mit dem zweiten Durchgang in einer Position innerhalb der unteren Hälfte der Formröhre verbindet, sodass der zweite Durchgang einen Luftkanal von dem ersten Durchgang zu dem Volumenraum oberhalb der Formröhre formt,
wobei der offene Behälter bei Schritt (e) durch Führen der wasserlöslichen granulösen Waschmittelzusammensetzung durch den ersten Durchgang, jedoch nicht den zweiten Durchgang, der Formröhre hindurch gefüllt wird, sodass die wasserlösliche granulöse Waschmittelzusammensetzung von dem Oberteil der Formröhre bis zu dem Unterteil der Formröhre und in den offenen Behälter befördert wird, und
wobei sich bei Schritt (e) jegliche verdrängte Luft, die durch die Führung der wasserlöslichen granulösen Waschmittelzusammensetzung durch den ersten Durchgang verursacht wird, durch die erste Luftentlüftungsöffnung und/oder die zweite Luftentlüftungsöffnung hindurch von dem ersten Durchgang in den Volumenraum oberhalb der Formröhre bewegen kann.

2. Verfahren nach Anspruch 1, wobei die erste Luftentlüftungsöffnung den ersten Durchgang mit dem zweiten Durchgang an einer Position innerhalb eines Fünftels bis zwei Fünftel entlang der Länge der Formröhre von dem Oberteil verbindet.

3. Verfahren nach einem der vorstehenden Ansprüche, wobei die zweite Luftentlüftungsöffnung den ersten Durchgang mit dem zweiten Durchgang an einer Position bei drei Fünftel bis vier Fünftel entlang der Länge der Formröhre von dem Oberteil verbindet.

4. Verfahren nach einem der vorstehenden Ansprüche, wobei die Formröhre mehr als einen zweiten Durchgang umfasst.

5. Verfahren nach einem der vorstehenden Ansprüche, wobei der erste Durchgang in der Mitte der Formröhre angeordnet ist.

6. Verfahren nach einem der vorstehenden Ansprüche, wobei die Formeinheit eine Formschulter umfasst, wobei die wasserunlösliche Vlieslage eine erste und eine zweite Kante aufweist, und während die wasserunlösliche Vlieslage die Formschulter überquert, die erste Kante und die zweite Kante in Nähe zueinander gebracht werden.

7. Verfahren nach einem der vorstehenden Ansprüche, wobei die Formröhre einen dritten Durchgang umfasst, der unter Vakuum betrieben wird und als ein Entlüftungssystem dient, um jegliches feine teilchenförmige Material aus dem Volumenraum unmittelbar unterhalb des Unterteils der Formröhre zu entfernen.

8. Verfahren nach einem der vorstehenden Ansprüche, wobei sich die Umgebungsbedingungen, die den Wäschewaschmittelartikel unmittelbar umgeben, wie er ab Schritt (d) geformt wird, bei einer Temperatur zwischen 20 °C und 30 °C und einer relativen Luftfeuchtigkeit zwischen 50 % und 95 % befinden.

9. Verfahren nach einem der vorstehenden Ansprüche, wobei die wasserunlösliche Vlieslage Polyvinylalkohol umfasst.

10. Verfahren nach Anspruch 9, wobei der Polyvinylalkohol einen durchschnittlichen prozentualen Hydrolysegrad von 75 % bis 100 % aufweist.

11. Verfahren nach einem der Ansprüche 9 bis 10, wobei der Polyvinylalkohol eine durchschnittliche Viskosität, wenn er als eine wässrige Lösung von 4 Gew.-% in demineralisiertem Wasser bei 20 °C gemessen wird, von 1 bis 65 mPas aufweist.

12. Verfahren nach einem der Ansprüche 9 bis 11, wobei die wasserunlösliche Vlieslage eine Vielzahl von Fasern umfasst, wobei die Fasern Polyvinylalkohol umfassen.

13. Verfahren nach einem der Ansprüche 9 bis 12, wobei der Polyvinylalkohol ein Thermoplast ist.

14. Verfahren nach einem der vorstehenden Ansprüche, wobei die wasserunlösliche Lage ein Basisgewicht von zwischen 15 g/m² und 60 g/m² aufweist.

## Revendications

1. Procédé de fabrication d'un article détergent pour le lavage du linge comprenant les étapes consistant à :
(a) fournir une feuille insoluble dans l'eau sur un rouleau ;
(b) dérouler la feuille insoluble dans l'eau dans une direction machine à partir du rouleau par l'intermédiaire d'au moins un premier rouleau intermédiaire ;
(c) alimenter la feuille insoluble dans l'eau à partir de l'au moins un rouleau intermédiaire par l'intermédiaire d'une unité de formage pour mettre en forme la feuille insoluble dans l'eau en une forme de tube ;
(d) sceller la feuille insoluble dans l'eau par l'intermédiaire d'un scellage de direction machine, d'un scellage de direction transversale ou d'un mélange de ceux-ci pour créer un contenant ayant une extrémité ouverte ;
(e) remplir le contenant ouvert avec une composition détergente granulaire hydrosoluble ;
(f) sceller la seconde extrémité ouverte par l'intermédiaire d'un scellage de direction machine, d'un scellage de direction transversale ou d'un mélange de ceux-ci pour former un article détergent pour le lavage du linge ;
dans lequel l'unité de formage comprend un tube de formage creux,
dans lequel le tube de formage creux comprend au moins deux passages, un premier passage et un deuxième passage,
dans lequel le premier passage passe sur la longueur du tube de formage à partir du sommet du tube de formage jusqu'au fond du tube de formage,
dans lequel le deuxième passage passe parallèle au premier passage et s'étend à partir du sommet du tube de formage jusqu'à au moins deux tiers vers le bas de la longueur du tube de formage,
dans lequel le deuxième passage est raccordé au premier passage par au moins deux évents d'air, un premier évent d'air qui raccorde le premier passage au deuxième passage dans une position au sein de la moitié supérieure du tube de formage, et un second évent d'air qui raccorde le premier passage au deuxième passage dans une position au sein de la moitié inférieure du tube de formage, de telle sorte que le deuxième passage forme un conduit d'air allant du premier passage à l'espace volumique au-dessus du tube de formage,
dans lequel pendant l'étape (e) le contenant ouvert est rempli en faisant passer la composition détergente granulaire hydrosoluble à travers le premier passage, mais pas le deuxième passage, du tube de formage de telle sorte que la composition détergente granulaire hydrosoluble se déplace du sommet du tube de formage au fond du tube de formage et dans le contenant ouvert, et
dans lequel pendant l'étape (e) l'air déplacé éventuel qui est causé par le passage de la composition détergente granulaire hydrosoluble à travers le premier passage, peut se déplacer à travers le premier évent d'air et/ou le second évent à partir du premier passage vers l'espace volumique au-dessus du tube de formage par l'intermédiaire du deuxième passage.

2. Procédé selon la revendication 1, dans lequel le premier évent d'air raccorde le premier passage au deuxième passage dans une position à plus ou moins un cinquième à deux cinquièmes le long de la longueur du tube de formage à partir du sommet.

3. Procédé selon l'une quelconque revendication précédente, dans lequel le second évent d'air raccorde le premier passage au deuxième passage dans une position située à trois cinquièmes à quatre cinquièmes le long de la longueur du tube de formage à partir du sommet.

4. Procédé selon l'une quelconque revendication précédente, dans lequel le tube de formage comprend plus d'un deuxième passage.

5. Procédé selon l'une quelconque revendication précédente, dans lequel le premier passage est localisé au centre du tube de formage.

6. Procédé selon l'une quelconque revendication précédente, dans lequel l'unité de formage comprend un épaulement de formage dans lequel la feuille non tissée insoluble dans l'eau a un premier bord et un second bord, et à mesure que la feuille non tissée insoluble dans l'eau passe par-dessus l'épaulement de formage le premier bord et le second bord sont amenés à proximité l'un de l'autre.

7. Procédé selon l'une quelconque revendication précédente, dans lequel le tube de formage comprend un troisième passage qui est exploité sous vide et joue le rôle de système de ventilation pour éliminer l'un quelconque matériau particulaire fin de l'espace volumique immédiatement en dessous du fond du tube de formage.

8. Procédé selon l'une quelconque revendication précédente, dans lequel les conditions environnementales entourant immédiatement l'article détergent pour le lavage du linge tel qu'il est formé à partir de l'étape (d) et après, sont à une température comprise entre 20 °C et 30 °C et à une humidité relative comprise entre 50 % et 95 %.

9. Procédé selon l'une quelconque revendication précédente, dans lequel la feuille non tissée insoluble dans l'eau comprend de l'alcool polyvinylique.

10. Procédé selon la revendication 9, dans lequel l'alcool polyvinylique a un degré moyen d'hydrolyse en pour cent allant de 75 % à 100 %.

11. Procédé selon l'une quelconque des revendications 9 à 10, dans lequel l'alcool polyvinylique a une viscosité moyenne, lorsqu'on mesure en tant que solution aqueuse à 4 % en poids dans de l'eau déminéralisée à 20 °C, allant de 1 à 65 mPa.s.

12. Procédé selon l'une quelconque des revendications 9 à 11, dans lequel la feuille non tissée insoluble dans l'eau comprend une pluralité de fibres, dans lequel les fibres comprennent de l'alcool polyvinylique.

13. Procédé selon l'une quelconque des revendications 9 à 12, dans lequel l'alcool polyvinylique est thermoplastique.

14. Procédé selon l'une quelconque revendication précédente, dans lequel la feuille insoluble dans l'eau a une masse surfacique comprise entre 15 g/m² et 60 g/m².
